# EUROPÄISCHE PATENTSCHRIFT

(11) **EP 3 560 322 B1**
(45) Veröffentlichungstag und Bekanntmachung des Hinweises auf die Patenterteilung: **05.01.2022**
(21) Anmeldenummer: 19155637.2
(22) Anmeldetag: 06.02.2019
(51) Int. Cl.: A01F 15/07

(54) **RUNDBALLENPRESSE**
ROUND-BALE PRESS
PRESSE À BALLES RONDES

(30) Priorität: 26.04.2018 DE 102018110035
(43) Veröffentlichungstag der Anmeldung: 30.10.2019
(73) Patentinhaber: Usines CLAAS France S.A.S, 57140 St. Rémy / Woippy (FR)
(72) Erfinder: Rongvaux, Laurent, 54800 Tronville (FR); Meaux, Fabien, 57270 Uckange (FR)
(74) Vertreter: CLAAS Gruppe

(56) Entgegenhaltungen:
- EP-A1- 1 048 201
- EP-A1- 1 266 562
- EP-B1- 1 048 201
- WO-A1-2017/213492
- DE-A1-102013 108 246
- US-A1- 2006 075 552

## Beschreibung

Die Erfindung betrifft eine Rundballenpresse mit einer Wickelvorrichtung zum Umhüllen von Rundballen gemäß dem Oberbegriff des Anspruches 1.

Rundballenpressen werden in der Landwirtschaft eingesetzt, um beispielsweise im Schwad abgelegtes halmartiges Erntegut wie Stroh, Heu, Gras oder dergleichen aufzunehmen und zu runden, im Wesentlichen zylinderförmigen Ballen, sogenannten Rundballen, zu pressen. Das Erntegut wird dabei in einer Presskammer der Rundballenpresse zu einem Rundballen verdichtet, wobei die Presskammer umfangsseitig durch einen oder mehrere umlaufenden Riemen und/oder rotierende Stahlrollen begrenzt sein kann. Die gepressten Rundballen werden üblicherweise nach Erreichen einer vorbestimmten Größe mit Schnüren und/oder einem Netz gebunden und durch eine hintere Klappenöffnung der Presskammer ausgeworfen und an eine der Presskammer nachgeordnete Wickelvorrichtung übergeben. Das Umwickeln eines Rundballens erfolgt besonders bei einer Verarbeitung von Gras und/oder Klee, da das Erntegut in dem Rundballen durch das Wickelmaterial, üblicherweise eine Folie, weitestgehend unter Ausschluss von Luft gelagert werden kann, wodurch eine anschließende Gärung zu Silage ermöglicht werden kann. Der Rundballen wird nach dem Pressen und/oder Umwickeln durch die Wickelvorrichtung auf dem Feld abgelegt.

Aus der EP 2 050 330 A1 ist beispielsweise eine derartige Rundballenpresse bekannt, welche heckseitig einen Ballenwickler aufweist, der im Wesentlichen einen Wickeltisch zur Aufnahme eines gepressten Rundballens sowie einen um eine vertikale Achse drehbaren Wickelarm umfasst. Der zweigliedrige Wickelarm ist jeweils endseitig mit einem Folienhalter ausgestattet, so dass sich ein auf dem Wickeltisch liegender Rundballen bei Rotation des Wickelarms mit Folie umhüllen lässt. Indem der Rundballen während des Umhüllens auf dem Wickeltisch zusätzlich um eine horizontale Drehachse in Drehung versetzt wird, ist der Rundballen nach Abschluss des Wickelvorgangs allseitig mit Folie umhüllt. Derartige Rundballenpressen mit einer Wickelvorrichtung benötigen aufgrund der Anordnung der Wickelvorrichtung hinter der Presskammer und des Platzbedarfs der Wickelvorrichtung beim Wickeln und bedingt durch die Wickelvorrichtung einen großen Bauraum, was beispielsweise im Straßenverkehr oder beim Manövrieren mit der Presse hinderlich sein kann.

Aus der DE 10 2013 108 246 A1 ist eine Rundballenpresse gemäß dem Oberbegriff des Anspruches 1 bekannt.

Es ist daher eine Aufgabe der Erfindung, eine Rundballenpresse mit integrierter Ballenwickeleinrichtung zu schaffen, welche einen geringeren Bauraumbedarf und eine verbesserte Handhabbarkeit aufweist.

Die Lösung der Aufgabe erfolgt erfindungsgemäß durch die kennzeichnenden Merkmale des Anspruches 1. Vorteilhafte Ausgestaltungen der Erfindung sind in den Unteransprüchen angegeben.

Eine Rundballenpresse für landwirtschaftliche Halmgüter umfasst eine in einem Gehäuse angeordneten Presskammer zum Pressen von Rundballen, welche in einem unteren Bereich zumindest eine im Wesentlichen gehäusefeste Pressrolle aufweist, und einer der Presskammer nachgelagerten Wickelvorrichtung mit einem Wickeltisch zum Umwickeln eines Rundballens mit einem Wickelmaterial. Gemäß der Erfindung ist der Wickeltisch mittels eines, insbesondere genau eines, Ladearmes beweglich an dem Gehäuse angeordnet, und ist zwischen zumindest einer Ladeposition zum Aufnehmen eines Ballens aus der Presskammer und einer Wickelposition zum Umwickeln des Ballens, insbesondere im Wesentlichen linear, verlagerbar ausgebildet. Das Gehäuse der Ballenpresse kann dabei auch einen Rahmen mit wenigstens einer daran angeordneten Radachse aufweisen, wobei der Ladearm an dem Rahmen, insbesondere benachbart zu einer Radachse, angeordnet sein kann. Die Verlagerung des Wickeltisches mittels eines erfindungsgemäßen Ladearms weist den Vorteil auf, das der Ladearm nur einen geringen Bauraumbedarf aufweist und somit eine verkürzte Bauform der Rundballenpresse ermöglicht wird, wodurch die Handhabbarkeit der Rundballenpresse, besonders beim Manövrieren oder im Straßenverkehr, verbessert wird.

Dabei ist der Ladearm pressenseitig um eine erste Schwenkachse verschwenkbar gelagert, und weist mindestens einen ersten Ausleger und einen zweiten Ausleger auf, welche über ein Knickgelenk um eine zweite Schwenkachse verschwenkbar verbunden sind. Die erste und zweite Schwenkachse können dabei im Wesentlichen parallel zueinander angeordnet sein. Der erste Ausleger kann dabei pressenseitig angeordnet sein, und der zweite Ausleger wickeltischseitig. Durch die Ausgestaltung des Ladearms in Form eines Knickarms kann der konstruktive Aufwand zum Verlagern des Wickeltisches geringgehalten werden, und zudem die Wartung vereinfacht werden. Zudem bietet der Ladearm die Möglichkeit den Wickeltisch zur Seite, beispielsweise in eine Wartungsposition in der der Wickeltisch zumindest teilweise seitlich über die Presskammer hinausragt, zu schwenken und ermöglicht so einen verbesserten Zugang zur Presskammer. Der Wickeltisch ist endseitig des Ladearmes um eine Rotationsachse drehbar und um eine Drehachse herum rotierbar ausgebildet. Die Rotationsachse kann dabei im Wesentlichen parallel zu der ersten und zweiten Schwenkachse ausgebildet sein. Durch die im Wesentlichen parallel ausgestaltete erste Schwenkachse, die zweite Schwenkachse und die Rotationsachse kann ein Verschwenken des Wickeltisches im Wesentlichen in einer Ebene erfolgen. Dabei ist die Drehachse im Wesentlichen parallel zu dem zweiten

Ausleger angeordnet, wodurch der Wickeltisch in einem weiteren Freiheitsgrad bewegbar ist, was den Vorteil bietet, dass ein Rundballen von dem Wickeltisch beispielsweise auf seiner Umfangsfläche oder Stirnfläche abgelegt werden kann, was besonders auf hügeligem Gelände von Vorteil ist.

In einer weiteren bevorzugten Ausgestaltung der Erfindung ist der Ladearm pressenseitig um eine im Wesentlichen waagerechte Kippachse in vertikaler Richtung kippbar ausgestaltet. Die Kippachse kann dabei im Wesentlichen parallel zu einer Radachse angeordnet sein. Dies kann ein im Wesentlichen vertikales Kippen des Ladearmes und damit des Wickeltisches bewirken, wodurch der Bewegungsraum des Wickeltisches weiter vergrößert werden kann.

Vorteilhafterweise ist ein Dämpfungsmittel zur Dämpfung einer Bewegung des Ladearmes um die Kippachse, insbesondere zwischen Gehäuse und erstem Ausleger, vorgesehen. Das Dämpfungsmittel kann dabei ein Feder-Dämpferelement sein, oder durch eine geeignete Ansteuerung eines Aktors, welcher zum Kippen des Ladearmes um die Kippachse vorgesehen sein kann, ausgebildet sein. Hierdurch können vorteilhafterweise dynamische Kräfte, die beispielsweise bei einer Fahrt über unebenen

Boden mit einem Ballen auf dem Wickeltisch entstehen können, gedämpft werden, welche sonst direkt in das Gehäuse der Presse übertragen würden.

In einer weiterhin bevorzugten Ausführungsform ist in der Ladeposition der Wickeltisch im Wesentlichen unterhalb der Presskammer und benachbart zu der mindestens einen gehäusefesten Pressrolle angeordnet. Die Presskammer kann hierbei geöffnet sein, beispielsweise durch verschwenken der hinteren Pressrollen. Diese Ladeposition hat den Vorteil, dass der fertig gepresste Rundballen unmittelbar aus der Presskammer auf den Wickeltisch, insbesondere nur durch Schwerkrafteinfluß, übergeladen werden kann, ohne dass hierfür zusätzliche Transportvorrichtungen notwendig sind., wodurch die Bauform der Ballenpresse kompakt gehalten werden kann.

In einer weiteren vorteilhaften Ausgestaltung der Erfindung ist mindestens eine Rolle des Wickelmaterials gehäusefest zum Umwickeln eines Rundballens an dem Gehäuse angeordnet. Die mindestens eine gehäusefest angeordnete Rolle des Wickelmaterials kann benachbart zu heckseitigen Pressrollen der Presskammer angeordnet sein. Während des Betriebs der Wickelvorrichtung kann das Wickelmaterial zum Umwickeln des Rundballens von der mindestens einen Rolle abgewickelt werden.

Vorteilhaft ist weiterhin, dass der Wickeltisch mittels des Ladearms in eine Transportposition, in welcher der Wickeltisch benachbart zu der Presskammer angeordnet ist und/oder in eine Ablageposition verbringbar ist, in welcher ein Rundballen von dem Wickeltisch umfangsseitig oder stirnseitig auf den Boden ablegbar ist. In der Transportposition kann der Wickeltisch mit der Auflageseite für einen Rundballen zu der Presskammer hin außenseitig an der Presskammer angeordnet sein, oder die Auflageseite kann von der Presskammer wegzeigen. Der Wickeltisch kann in der Transportposition bei geschlossener Presskammer im Wesentlichen benachbart zu der mindestens einen gehäusefest angeordneten Pressrolle angeordnet sein. Der Wickeltisch kann parallel zu den eingeschwenkten Auslegern des Ladearmes angeordnet sein und mit diesen nach oben in Richtung der Presskammer um die Kippachse gekippt sein. Die Ablageposition ermöglicht ein Ablegen eines fertig gepressten und/oder umwickelten Rundballens aud seine Umfangsfläche oder eine seiner Stirnflächen, wodurch besonders in uneben Gelände ein Wegrollen der Rundballen vermieden werden kann.

In einer besonders bevorzugten Ausgestaltung der Erfindung ist zur Steuerung des Ladearms, des Wickeltisches und/oder der Wickelvorrichtung, insbesondere zur Verlagerung des Wickeltisches in eine Ladeposition, eine Wickelposition, eine Transportposition und/oder eine Ablageposition, eine Steuerungsvorrichtung vorgesehen. Eine Steuerungsvorrichtung zur Steuerung und/oder Regelung des Wickelarms, des Wickeltisches und/oder einer Verlagerung der Wickelvorrichtung kann, insbesondere fernbedienbar, an der Rundballenpresse angeordnet sein. Die Steuerungsvorrichtung kann drahtgebunden und/oder drahtlos mit einer arbeitsmaschinenseitig angeordneten Steuer- und Regeleinrichtung verbindbar sein. Die hat den Vorteil, dass eine Verlagerung des Wickeltisches in eine Ladeposition, eine Wickelposition, eine Transportposition und/oder eine Ablageposition komfortabel durch den Bediener von der Arbeitsmaschine aus steuerbar ist.

In einer besonders bevorzugten Ausgestaltung der Erfindung ist mindestens ein Aktor zur Bewegung des Ladearmes und/oder des Wickeltisches vorgesehen, welcher ein hydraulischer, pneumatischer und/oder elektrischer Aktor ist. Unter einer Bewegung ist dabei ein Verschwenken, Kippen und/oder Rotieren, beispielsweise des Ladearmes und/oder Wickeltisches, zu verstehen. Eine Ausgestaltung eines Aktors in Form eines Hydraulikzylinders hätte den Vorteil, dass dieser mit der Hydraulik einer Arbeitsmaschine, welcher die Rundballenpresse bewegt und mit Energie versorgt, verbunden werden kann. Dies ermöglicht einen leistungsfähigen Aktor mit geringem Aufwand nutzbar zu machen.

Nachfolgend wird die Erfindung unter Bezugnahme auf die anliegenden Zeichnungen näher erläutert.

Es zeigt:
- Fig. 1:: eine schematische Seitenansicht einer Rundballenpresse mit einem Wickeltisch in einer Ladeposition;
- Fig. 2:: eine schematische Seitenansicht der Rundballenpresse aus Fig. 1 beim Umwickeln eines Rundballens mit einem Wickelmaterial;
- Fig. 3:: eine schematische Darstellung der Rundballenpresse mit einem Wickeltisch in einer Ablageposition;
- Fig. 4:: eine schematische Draufsicht mit einem seitlich verschwenkten Wickeltisch in einer Ablageposition; und
- Fig. 5:: eine schematische Darstellung der Rundballenpresse mit einem Wickeltisch in einer Transportposition.

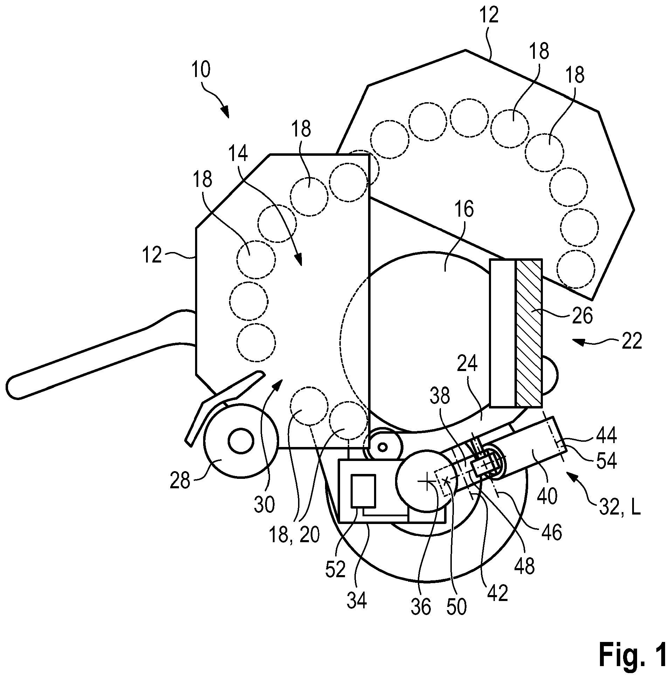

In Fig. 1 ist eine Rundballenpresse 10 mit einer in einem Gehäuse 12 angeordneten Presskammer 14 zum Pressen von Rundballen 16 in einer schematischen Seitenansicht dargestellt. Die Rundballenpresse 10 ist in Form einer Festkammerpresse ausgebildet, kann aber alternativ auch in Form einer Rundballenpresse 10 mit einer variablen Presskammer ausgebildet sein. Die Rundballenpresse 10 kann mit einer landwirtschaftlichen Arbeitsmaschine als Zugfahrzeug (nicht dargestellt) zum Fortbewegen und Versorgen mit Antriebsenergie verbunden werden. Die Rundballenpresse 10 dient üblicherweise dem Aufnehmen und Verdichten von Erntegut, welches über einen Rotor 28 durch eine Zuführöffnung 30 in die Presskammer 14 geleitet und dort verdichtet wird. Die dargestellte Presse weist eine Presskammer 14 auf, entlang deren Umfang Pressrollen 18 angeordnet sind, wobei benachbart zu der Zuführöffnung gehäusefeste Pressrollen 20 angeordnet sind, welche auch bei einem Auswerfen des Rundballens 16 nicht verlagert werden. Ein Teil der Pressrollen 18 ist zusammen mit einem hinteren Teil des Gehäuses 12 verschwenkbar ausgebildet, damit ein fertig gepresster Rundballen 16 aus der Presskammer 14 ausgeworden und einer der Presskammer 14 nachgeordneten Wickelvorrichtung 22 zugeführt werden kann. Die Wickelvorrichtung 22 dient dazu, einen Rundballen 16 mit einem Wickelmaterial 26 wie einer Folie zu umwickeln, beispielsweise um das Erntegut als Tierfutter zu silieren. Das Wickelmaterial 26 wird dabei in Rollen vorgehalten. Der Rundballen 16 wird dabei üblicherweise auf einem Wickeltisch 24 abgelegt, welcher den Rundballen 16 zumindest um seine Geometrieachse drehen kann, um ein gleichmäßiges Umwickeln mit dem Wickelmaterial 26 zu gewährleisten. Die dargestellte Rundballenpresse 10 weist eine heckseitig geöffnete Presskammer 14 auf, wobei ein hinterer Teil des Gehäuses 12 mit den dort angeordneten Pressrollen 18 nach oben verschwenkt ist und so ein entnehmen des Rundballens 16 aus der Presskammer 14 ermöglicht.

Gemäß der Erfindung ist der dargestellte Wickeltisch 24 mit einem Ladearm 32 an dem Gehäuse 12 der Rundballenpresse 10 angeordnet. Der Wickeltisch 24 kann dadurch aus der dargestellten Ladeposition L im Wesentlichen linear zu einer Längsrichtung der Presse 10 in eine Wickelposition W verlagert werden. In der dargestellten Ladeposition L ist der Wickeltisch 24 bei geöffneter Presskammer 14 an einer gehäusefesten Pressroll 20 angeordnet, welche bodenseitig der Presskammer 14 und benachbart zu der Zuführöffnung 30 angeordnet ist. Der Rundballen 16 ist zumindest teilweise durch Einfluß der Schwerkraft aus der geöffneten Presskammer 14 auf den Wickeltisch 24 gelangt.

Der Wickeltisch 24 ist über den Ladearm 32 mit dem Gehäuse 12 der Presse schwenkbar verbunden. Der Ladearm 32 ist dabei mit einem Rahmen 34 des Gehäuses 12 benachbart zu einer Radachse 36 verbunden. Der Ladearm 32 ist in Form eines Knickarmes ausgebildet und weist einen ersten Ausleger 38 und einen zweiten Ausleger 40 auf, welche über ein Knickgelenk 54 verschwenkbar miteinander verbunden sind. Der erste Ausleger 38 ist dabei mit dem Gehäuse 12, insbesondere dem Rahmen 34, und der zweite Ausleger 40 mit dem Wickeltisch 24 verbunden. Der Ladearm 32 ist gehäuseseitig um eine erste Schwenkachse 42 und in dem Knickgelenk 54 um eine zweite Schwenkachse 44 verschwenkbar, wobei die erste und zweite Schwenkachse 42, 44 im Wesentlichen parallel angeordnet sind, wodurch der Ladearm 32 im Wesentlichen in einer Ebene verschwenkt werden kann. Endseitig des Ladearmes 32 oder des zweiten Auslegers 40 ist der Wickeltisch 24 zumindest um eine Rotationsachse 46 drehbar angeordnet. Die Rotationsachse 46, die erste Schwenkachse 42 und/oder zweite Schwenkachse 44 können parallel angeordnet sein, wodurch ein Verschwenken des Ladearmes 32 und des Wickeltisches 24 im Wesentlichen in einer Ebene ermöglicht wird. Endseitig des zweiten Auslegers 40 der Wickeltisch 24 ist mittels eines Drehgelenks um eine Drehachse 48 drehbar. Die Drehachse 48 ist dabei parallel, insbesondere koaxial, zu dem zweiten Ausleger 40 angeordnet. Um den Wickeltisch 24 in die dargestellte Ladeposition L zur Aufnahme des Rundballens 16 verbringen zu können, ist der Ladearm 32 um eine Kippachse 50 herum in der Vertikalen kippbar ausgestaltet. Die Kippachse 50 ist dabei im Wesentlichen parallel zur Radachse 36 angeordnet.

Der Ladearm 32 ist an einer Seite des Rahmens 34 angeordnet, um über das Knickgelenk 54 eine im Wesentlichen lineare Bewegung des Wickeltisches 24 zu ermöglichen. Eine Steuerung der Bewegung des Ladearmes 32, des Wickeltisches 24 und/oder der Wickelvorrichtung 22 erfolgt über eine Steuerungsvorrichtung 52, welche pressenseitig installiert ist. Die Steuerungsvorrichtung 52 steuert dabei die zur Erreichung einer bestimmten Position notwendigen Bewegungen des Ladearmes 32.

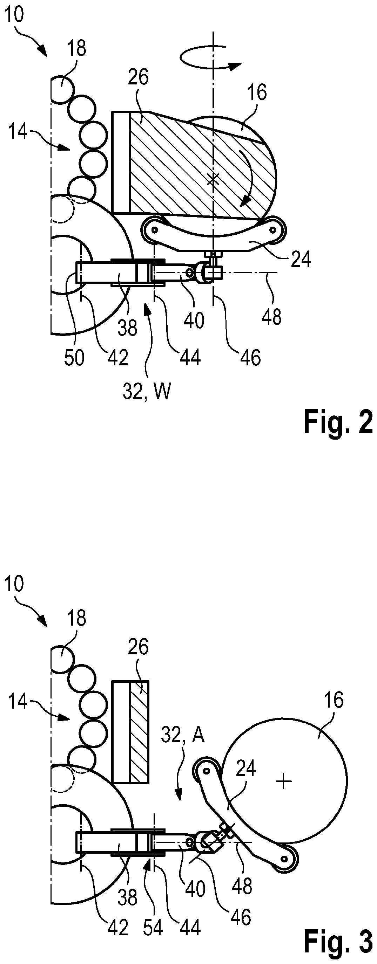

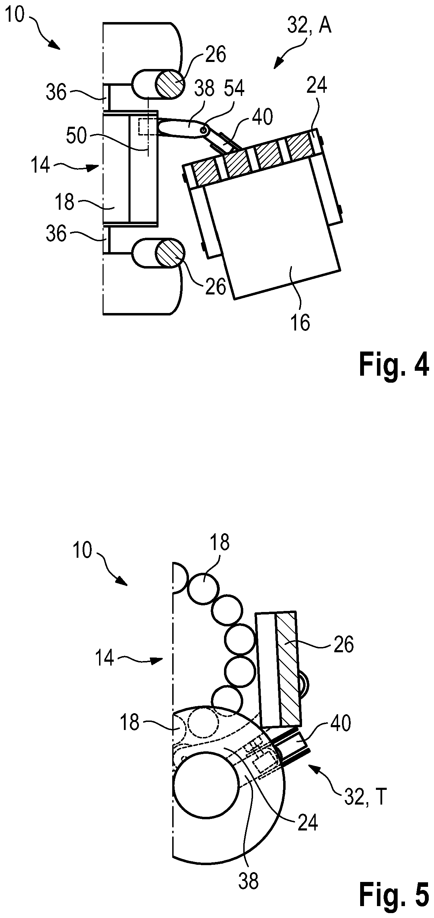

Das Wickelmaterial 26 (Fig. 2) zum Umhüllen des Rundballens 16 ist heckseitig an dem Gehäuse 12 der Presse 10 in Form von mindestens einer Rolle angeordnet. Der Ladearm 32 ist in im Wesentlichen horizontaler Richtung nach hinten verschwenkt, wodurch der Wickeltisch 24 mit dem Rundballen 16 hinter der geschlossenen Presskammer 14 in eine Wickelposition W verbracht wurde. Das Wickelmaterial 26 umspannt den Rundballen 16, wobei der Rundballen 16 durch den Wickeltisch 26 ebenfalls in Rotation versetzt werden kann, wodurch eine vollständige Umwickelung des Rundballens 16 mit dem Wickelmaterial 24 gewährleistet werden kann. Der Ladearm 32 ist dabei in eine im Wesentlichen waagerechte Position um seine Kippachse 50 verkippt, wobei die erste und zweite Schwenkachse 42, 44 und die Rotationsachse 46 des Wickeltisches 24 im Wesentlichen parallel angeordnet sind, so dass der Ladearm 32 im Wesentlichen in einer Ebene verschwenkt ist. Nach dem Umwickeln des Rundballens 16 mit dem Wickelmaterial 26 ist der Wickeltisch 24 in die Ablageposition A verbracht (Fig. 3), in der, beispielsweise unter Berücksichtigung der geographischen Randbedingungen, die Ablage des Rundballens 16 auf den Boden erfolgt. Der Ladearm 32 ist außermittig an dem Gehäuse 12 bzw. dem Rahmen 34 befestigt, und außenseitig benachbart an einem der Räder angeordnet. Aufgrund der außermittigen Anordnung ist der Ladearm 32 in der dargestellten Ablageposition A leicht in dem Knickgelenk 54 zur Mitte hin geknickt, so dass mittels einer Drehung um die Drehachse 48 der Wickeltisch 24 so weit nach hinten gekippt werden kann, dass der Rundballen 16 auf dem Boden abgelegt werden kann. Hierbei ist auch eine, wie in Figur 4 dargestellt, seitliche Ablage des Rundballens 16 möglich, welche besonders in hügeligem Gelände ein Weggrollen des Rundballen 16 vermeiden hilft. Denkbar ist auch eine Ablageposition A des Wickeltisches 24, in ein Rundballen auf einer seiner Stirnseiten abgelegt werden kann. Hierdurch kann bei besonders hügeligem Gelände ein sicheres Ablegen und ein Wegrollen des Ballens 16 vermieden werden. Der Ladearm 32 ist mit dem ersten Ausleger 38 rechts unterhalb der Presskammer 14, benachbart zu dem in Fahrtrichtung der Presse 10 gesehenen Bereich des Rahmens 34, derart angeordnet, dass der Ladearm 32 und insbesondere der erste Ausleger 38, um die erste Schwenkachse 42 und die Kippachse 50 herum bewegbar sind.

In der in Figur 5 dargestellten Transportposition T ist der Wickeltisch 24 mittels des Ladearms 32 weitestgehend nach innen und unterhalb der Presskammer 14 verschwenkt. Zudem ist der Wickeltisch 24 über ein Verkippen des Ladearmes 32 in vertikaler Richtung unmittelbar benachbart an die Presskammer 14 herangeklappt. Der Wickeltisch 24 ragt dabei nicht über die beiderseitig des Gehäuses 12 angeordneten Rollen des Wickelmaterials 26 hinaus und ragt heckseitig nicht über die Presse 10 hinaus.

### Bezugszeichenliste

- 10: Rundballenpresse
- 12: Gehäuse
- 14: Presskammer
- 16: Rundballen
- 18: Pressrolle
- 20: gehäusefeste Pressrolle
- 22: Wickelvorrichtung
- 24: Wickeltisch
- 26: Wickelmaterial
- 28: Rotor
- 30: Zufuhröffnung
- 32: Ladearm
- 34: Rahmen
- 36: Radachse
- 38: erster Ausleger
- 40: zweiter Ausleger
- 42: erste Schwenkachse
- 44: zweite Schwenkachse
- 46: Rotationsachse
- 48: Drehachse
- 50: Kippachse
- 52: Steuerungsvorrichtung
- 54: Knickgelenk

- L: Ladeposition
- W: Wickelposition
- A: Ablageposition
- T: Transportposition

## Patentansprüche

1. Rundballenpresse mit einer in einem Gehäuse (12) angeordneten Presskammer (14) zum Pressen von Rundballen (16), welche in einem unteren Bereich zumindest eine im Wesentlichen gehäusefeste Pressrolle (20) aufweist, und einer der Presskammer (14) nachgelagerten Wickelvorrichtung (22) mit einem Wickeltisch (24) zum Umwickeln eines Rundballens (16) mit einem Wickelmaterial (26), wobei der Wickeltisch (24) mittels eines Ladearmes (32) beweglich an dem Gehäuse (12) angeordnet ist, und zwischen zumindest einer Ladeposition (L) zum Aufnehmen eines Ballens (16) aus der Presskammer (14) und einer Wickelposition (W) zum Umwickeln des Ballens (16) verlagerbar ausgebildet ist, **dadurch gekennzeichnet, dass** der Ladearm (32) pressenseitig um eine erste Schwenkachse (42) verschwenkbar gelagert ist und mindestens einen ersten Ausleger (38) und einen zweiten Ausleger (40) aufweist, welche über ein Knickgelenk (54) um eine zweite Schwenkachse (44) verschwenkbar verbunden sind, und dass der Wickeltisch (24) endseitig des Ladearmes (32) um eine Rotationsachse (46) drehbar und um eine parallel zu dem zweiten Ausleger (40) angeordnete Drehachse (48) herum rotierbar ausgebildet ist.

2. Rundballenpresse nach Anspruch 1, **dadurch gekennzeichnet, dass** der Ladearm (32) pressenseitig um eine im Wesentlichen waagerechte Kippachse (50) in vertikaler Richtung kippbar ausgestaltet ist.

3. Rundballenpresse nach Anspruch 2, **dadurch gekennzeichnet, dass** ein Dämpfungsmittel zur Dämpfung einer Bewegung des Ladearmes (32) um die Kippachse (50), insbesondere zwischen Gehäuse (12) und erstem Ausleger (38), vorgesehen ist.

4. Rundballenpresse nach einem der vorherigen Ansprüche, **dadurch gekennzeichnet, dass** in der Ladeposition (L) der Wickeltisch (24) im Wesentlichen unterhalb der Presskammer (14) und benachbart zu der mindestens einen gehäusefesten Pressrolle (20) angeordnet ist.

5. Rundballenpresse nach einem der vorherigen Ansprüche, **dadurch gekennzeichnet, dass** mindestens eine Rolle (26) des Wickelmaterials gehäusefest zum Umwickeln eines Rundballens (16) an dem Gehäuse (12) angeordnet ist.

6. Rundballenpresse nach einem der vorherigen Ansprüche, **dadurch gekennzeichnet, dass** der Wickeltisch (24) mittels des Ladearms (32) in eine Transportposition (T), in welcher der Wickeltisch (24) benachbart zu der Presskammer (14) angeordnet ist, und/oder in eine Ablageposition (A) verbringbar ist, in welcher ein Rundballen (16) von dem Wickeltisch (24) umfangsseitig oder stirnseitig auf den Boden ablegbar ist.

7. Rundballenpresse nach einem der vorherigen Ansprüche, **dadurch gekennzeichnet, dass** zur Steuerung des Ladearms (32), des Wickeltisches (24) und/oder der Wickelvorrichtung (22), insbesondere zur Verlagerung des Wickeltisches (24) in eine Ladeposition (L), eine Wickelposition (W), eine Transportposition (T) und/oder eine Ablageposition (A), eine Steuerungsvorrichtung (52) vorgesehen ist.

8. Rundballenpresse nach einem der vorherigen Ansprüche, **dadurch gekennzeichnet, dass** mindestens ein Aktor zur Bewegung des Ladearmes (32) und/oder des Wickeltisches (24) vorgesehen ist, welcher ein hydraulischer, pneumatischer und/oder elektrischer Aktor ist.

## Claims

1. A round baler with a bale chamber (14) disposed in a housing (12) for pressing round bales (16), which in a lower section has at least one pressing roller (20) which is substantially fixed to the housing, and a wrapping device (22) which is mounted downstream of the bale chamber (14), having a wrapping table (24) for wrapping a round bale (16) with a wrapping material (26), wherein the wrapping table (24) is movably disposed on the housing (12) by means of a loading arm (32) and can be displaced between at least a loading position (L) for receiving a bale (16) from the bale chamber (14) and a wrapping position (W) for wrapping the bale (16), **characterized in that** on the baler side, the loading arm (32) is pivotably mounted about a first pivot axis (42) and has at least a first boom (38) and a second boom (40) which are pivotably connected via a swivel joint (54) about a second pivot axis (44), and **in that** the wrapping table (24) at the end of the loading arm (32) can be turned about an axis of rotation (46) and can be rotated about a rotary axis (48) disposed parallel to the second boom (40).

2. The round baler according to claim 1, **characterized in that** on the press side, the loading arm (32) is configured so that it can be tilted in the vertical direction about a substantially horizontal tilt axis (50).

3. The round baler according to claim 2, **characterized in that** a damping means is provided for damping a movement of the loading arm (32) about the tilt axis (50), in particular between the housing (12) and the first boom (38).

4. The round baler according to one of the preceding claims, **characterized in that** in the loading position (L), the wrapping table (24) is disposed substantially below the bale chamber (14) and adjacent to the at least one pressing roller (20) which is fixed to the housing.

5. The round baler according to one of the preceding claims, **characterized in that** at least one roller (26) of the wrapping material is fixedly disposed on the housing (12) for the purposes of wrapping a round bale (16).

6. The round baler according to one of the preceding claims, **characterized in that** by means of the loading arm (32), the wrapping table (24) can be moved into a transport position (T) in which the wrapping table (24) is disposed adjacent to the bale chamber (14), and/or into an unloading position (A) in which a round bale (16) can be unloaded from the wrapping table (24) onto the ground onto its circumference or onto its end.

7. The round baler according to one of the preceding claims, **characterized in that** a control device (52) is provided in order to control the loading arm (32), the wrapping table (24) and/or the wrapping device (22), in particular in order to displace the wrapping table (24) into a loading position (L), a wrapping position (W), a transport position (T) and/or an unloading position (A).

8. A round baler according to one of the preceding claims, **characterized in that** at least one actuator is provided in order to move the loading arm (32) and/or the wrapping table (24), the actuator being a hydraulic, pneumatic and/or electric actuator.

## Revendications

1. Presse à balles rondes comprenant une chambre de pressage (14) disposée dans un carter (12) pour presser des balles rondes (16), laquelle comporte dans une zone inférieure au moins un rouleau presseur (20) sensiblement solidaire du carter, et comprenant un dispositif d'enrubannage (22) en aval de la chambre de pressage (14) avec une table d'enrubannage (24) pour enrubanner une balle ronde (16) avec un matériau d'enrubannage (26), la table d'enrubannage (24) étant disposée mobile sur le carter (12) au moyen d'un bras de chargement (32) et étant conçue déplaçable entre au moins une position de chargement (L) pour recevoir une balle (16) à partir de la chambre de pressage (14) et une position d'enrubannage (W) pour enrubanner la balle (16), **caractérisée en ce que**, côté presse, le bras de chargement (32) est monté pivotant autour d'un premier axe de pivotement (42) et comporte au moins un premier segment (38) et un second segment (40) qui sont reliés de manière pivotante autour d'un second axe de pivotement (44) par l'intermédiaire d'une genouillère (54), et **en ce que** la table d'enrubannage (24) est conçue tournante autour d'un axe de rotation (46) à l'extrémité du bras de chargement (32) et à rotation autour d'un axe de rotation (48) disposé parallèlement au second segment (40).

2. Presse à balles rondes selon la revendication 1, **caractérisée en ce que**, côté presse, le bras de chargement (32) est conçu basculant dans la direction verticale autour d'un axe de basculement sensiblement horizontal (50).

3. Presse à balles rondes selon la revendication 2, **caractérisée en ce qu'**un moyen amortisseur est prévu en particulier entre le carter (12) et le premier segment (38) pour amortir un déplacement du bras de chargement (32) autour de l'axe de basculement (50)

4. Presse à balles rondes selon une des revendications précédentes, **caractérisée en ce que**, dans la position chargée (L), la table d'enrubannage (24) est disposée sensiblement au-dessous de la chambre de pressage (14) et au voisinage du au moins un rouleau presseur (20) solidaire du carter.

5. Presse à balles rondes selon une des revendications précédentes, **caractérisée en ce qu'**au moins un rouleau (26) du matériau d'enrubannage est disposé solidaire du carter pour enrubanner une balle ronde (16) au niveau du carter (12).

6. Presse à balles rondes selon une des revendications précédentes, **caractérisée en ce que** la table d'enrubannage (24) peut être transférée au moyen du bras de chargement (32) dans une position de transport (T), dans laquelle la table d'enrubannage (24) est disposée au voisinage de la chambre de pressage (14), et/ou dans une position de dépose (A) dans laquelle une balle ronde (16) peut, à partir de la table d'enrubannage (24), être déposée au sol sur sa surface de pourtour ou sur sa surface frontale.

7. Presse à balles rondes selon une des revendications précédentes, **caractérisée en ce que**, pour commander le bras de chargement (32), la table d'enrubannage (24) et/ou le dispositif d'enrubannage (22), en particulier pour transférer la table d'enrubannage (24) vers une position de chargement (L), une position d'enrubannage (W), une position de transport (T) et/ou une position de dépose (A), il est prévu un dispositif de commande (52).

8. Presse à balles rondes selon une des revendications précédentes, **caractérisée en ce qu'**au moins un actionneur est prévu pour déplacer le bras de chargement (32) et/ou la table d'enrubannage (24), lequel est un actionneur hydraulique, pneumatique et/ou électrique.
